# EUROPEAN PATENT APPLICATION

(11) **EP 4 006 481 A1**
(43) Date of publication of application: **01.06.2022**
(21) Application number: 20843173.4
(22) Date of filing: 21.07.2020
(51) Int. Cl.: G01B 7/30, G01P 3/42

(54) **POSITION SENSOR SYSTEM**

(30) Priority: 23.07.2019 ES 201931266 U
(71) Applicant: Piher Sensors & Controls, S.A., 31500 Navarra (ES)
(72) Inventor: RUIZ RODERO, Koldo, 31500 TUDELA (NAVARRA) (ES); FORNIES GARCIA, Carlos, 31500 TUDELA (NAVARRA) (ES); ALAVA ZUAZU, Ignacio, 31500 TUDELA (NAVARRA) (ES); ENERIZ SALVATIERRA, Angel Luis, 31500 TUDELA (NAVARRA) (ES)
(74) Representative: Durán-Corretjer, S.L.P.
(86) International application number: PCT/ES2020/070472
(87) International publication number: WO 2021/014045

(57) **Abstract**

The invention relates to an inductive position sensor system for high-speed motors that does not comprise magnets, brushes or magnetic shields.

The sensor system comprises: a sensor including an inductor coil and a passive coil, the inductor coil inducing a voltage in the passive coil; an electronic signal-processing circuit comprising a chip for processing a signal corresponding to the magnetic field induced in the passive coil; and a conductive element movable with respect to the passive coil such that the magnetic field induced in the passive coil varies;
wherein the sensor comprises three coils, one of the three coils being an inductive coil and two of the three coils being passive coils,
and the chip is an analogue chip that provides an analogue sine/cosine output signal.

## Description

The present invention relates to an inductive position sensor system.

It is important to determine correctly the position of motors, and this is usually achieved using elements such as encoders or resolvers, which are a type of rotary electric transformer used for control and regulation tasks.

Position detection by resolvers is usually achieved by means of sensors that comprise magnets, such as those disclosed in European patents EP1538448 A1 and EP0562775, for example. The use of inductive position sensors for position detection is also known, although in these cases a digital chip is used which provides a digital signal. The problem with these digital chip models is that they lock at high speeds, and cease to function correctly.

Patent PCT WO2015/16481 A1 discloses a sensor system for determining the rotation of a motor which does not comprise magnets. The model disclosed in this document, based on the eddy current phenomenon, comprises a passive conductor element which is moved beneath interconnected active coils and uses an inductance-to-digital converter (IDC) to generate excitation in the coils, which in turn generates a Foucault current in the conductor, and to transform the inductance data measured by a sensor into information on the position of the rotation of the passive conductor element. However, this sensor has exclusively digital output signals and has the same drawbacks as the above-mentioned magnet sensors, becoming locked at high speeds.

Patent PCT WO2005098370 A1 discloses an inductive sensor device for measuring the position of a movable part using the physical phenomenon of eddy currents or Foucault currents. However, its configuration makes it unsuitable at high speeds.

An object of the present invention is to disclose a position sensor system that does not have the drawback of locking at high speeds.

The position sensor according to the present invention allows the position of a motor to be determined based on the Foucault current principle. More specifically, the sensor system according to the present invention allows the absolute position of a motor to be determined from the change in voltage caused by a conductor element coupled to the shaft of the motor when said conductor element is placed above the coils of the sensor, in particular above the passive (i.e. induced) coils thereof. In addition, the signal provided by the sensor according to the present invention is an analogue, sine-cosine signal at very high speed. The present invention allows speeds of up to 600,000 rpm to be detected.

The sensor system of the present invention improves on known systems in comprising at least one coil that induces a current and at least two coils that are receiver or passive coils. The inductor coil generates voltage in the receiver coils, such that when the conductor element or "target" passes above said coils, owing to the eddy current effect, the voltage of the coils above which said conductor element is positioned is cancelled. Said conductor element produces a sine/cosine signal in the two receiver coils when a complete rotation of the conductor element occurs, said sine/cosine signal making it possible to ascertain the angular position (or linear position, depending on the design) of the conductor element. The chip used in the invention applies the eddy current principle to detect the position of a target conductor element that is moved between a set of coils.

Determining position does not require a computational load since it is determined directly from the reading of the voltage of the induced coil or coils. Unlike other known sensor systems in which the output signal must be demodulated using additional electronics, the sensor system according to the present invention does not require the use of said additional electronics.

The use of an analogue chip means that the sensor system is suitable for high-speed applications, where other types of chip become locked. The use of this type of analogue chip, based on an inductive principle without magnets, means that the cost of the sensor system is more economical. In addition, it makes said system immune to other magnetic fields without having to use magnetic shields, and also allows its use in hostile environments and at high temperatures.

Therefore the sensor according to the present invention is also economical compared with other solutions in not requiring magnets, brushes or magnetic shields in order to determine the position of the application.

More particularly, the present invention discloses an inductive position sensor system for motors, without said sensor system comprising magnets, brushes or magnetic shields, the sensor system comprising a sensor which comprises at least one inductor coil and at least one passive coil, the at least one inductor coil inducing voltage in the at least one passive coil, and an electronic signal processing circuit, the electronic circuit comprising a chip for processing a signal corresponding to the magnetic field induced in the at least one passive coil; the sensor system also comprising a conductor element which is movable with respect to the at least one passive coil such that the magnetic field induced in the at least one passive coil varies; with the particular feature that the sensor comprises at least three coils, one of said at least three coils being an inductor coil and two of said at least three coils being passive coils; and that the chip is an analogue chip, said analogue chip supplying an analogue sine-cosine output signal, such that the position can be detected from a reading of the voltage of the passive coil or coils without having to demodulate the signal by means of additional electronics. This sine-cosine signal is a high-speed signal, such that processing the signal does not require a computational load. Because processing the signal does not require a computational load, the sensor system requires neither additional electronics nor the performance of complex calculations. The system according to the present invention prevents the locking at high speeds that occurs in the sensors known at present. In some configurations, the sensor comprises a number of inductor coils and a number of passive coils.

Preferably, said chip is configured to process the voltage signal of said passive coil. Preferably, the sensor has the general form of a circular crown.

Preferably, the inductor and passive coils and the analogue chip are located inside a module formed by a housing and a cover.

Preferably, the analogue chip is integrated in a printed circuit board (PCB). More preferably, the inductor coils and the passive coils are painted onto a PCB.

In an alternative embodiment, the sensor comprises more than one set of coils, each of the sets of coils comprising at least three coils, one of said at least three coils being an inductor coil and two of said at least three coils being passive coils. In this alternative embodiment, the sensor would preferably comprise two sets of coils.

Preferably, the inductor coils and the passive coils and the analogue chip are positioned on the same PCB.

Preferably, the conductor element is a metallic element. More preferably, the metallic element is a PCB. Still more preferably, the conductor element is a PCB with areas of painted copper.

Preferably, the conductor element is in the form of a circular crown. More preferably, the conductor element comprises means for coupling to a motor. More preferably, the conductor element comprises means for coupling to a shaft of a motor. More preferably, the conductor element is a metallic element in the form of a circular crown, said conductor element having means for coupling to a part of the motor. More preferably, the sensor and the conductor element are in the form of a circular crown.

Preferably, the conductor element is also comprised inside a module formed by a housing and a cover. More preferably, the inductor coils, the passive coils and the analogue chip are positioned inside a sensor module formed by a housing and a cover; and the conductor element is comprised inside a passive module formed by a housing and a cover.

In an alternative embodiment, the conductor element is a part of a motor. In this alternative embodiment, the conductor element is preferably the shaft of the motor.

Preferably, the chip is configured to process the voltage signal of the passive coils. In an alternative embodiment, the sensor comprises more than one chip.

The present invention also discloses an inductive position sensor for motors comprised in the sensor system.

More particularly, the present invention discloses an inductive position sensor for high-speed motors, which comprises at least one inductor coil and at least one passive coil, the at least one inductor coil inducing voltage in the at least one passive coil, and an electronic signal processing circuit, said electronic circuit comprising a chip for processing a signal corresponding to the magnetic field induced in the at least one passive coil; with the particular feature of comprising at least three coils, one of said at least three coils being an inductor coil and two of said at least three coils being passive coils; and of the chip being an analogue chip configured to process the voltage signal of the passive coils, said analogue chip providing an analogue, sine-cosine output signal, such that the position can be detected from a reading of the voltage of the passive coil or coils without having to demodulate the signal by means of additional electronics.

Preferably, said analogue chip is integrated in a PCB and said inductor coils and passive coils are painted onto said same PCB. More preferably, said position sensor comprises more than one set of coils, each of said sets of coils comprising at least three coils, one of said at least three coils being an inductor coil and two of said at least three coils being passive coils. Still more preferably, said position sensor comprises more than one chip.

The present invention also relates to a module formed by a housing and a cover which comprises the position sensor. The present invention also relates to a module formed by a housing and a cover which comprises the conductor element.

The present invention also relates to the use of the sensor system to determine the position of a motor.

For a better understanding, the accompanying drawings are given as an explanatory but non-limiting example of an embodiment of the present invention.
Fig. 1 is a perspective view of an embodiment of the sensor system according to the present invention.
Fig. 2 is a second perspective view of the example in Fig. 1.
Fig. 3 is a side view of the example in Fig. 1 and 2.
Fig. 4 is a cross section along a diametral plane of the sensor system of the example in Fig.1, 2 and 3.
Fig. 5 is an exploded perspective view of the sensor module.
Fig. 6 is a cross section along a diametral plane of the passive module.
Fig. 7 is an exploded perspective view of the passive module.

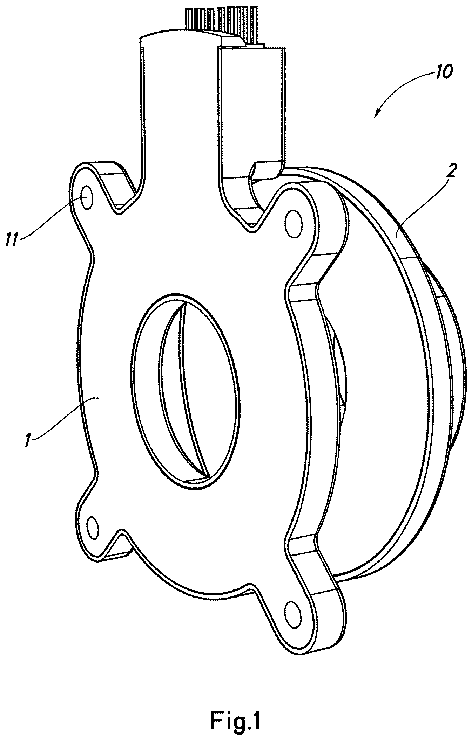

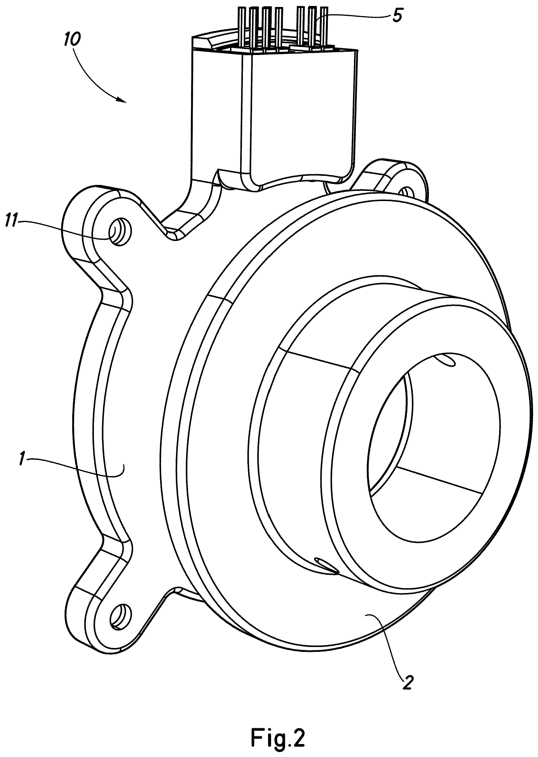

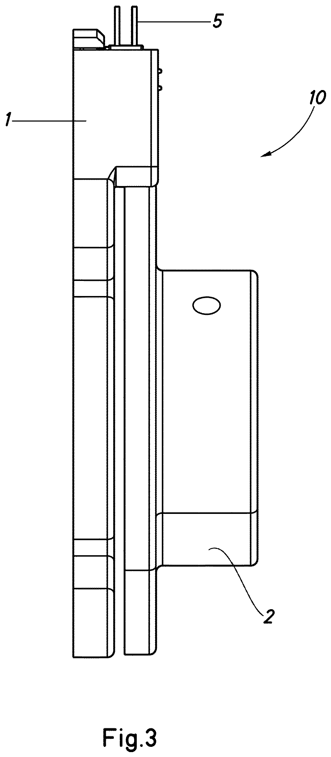

Fig. 1 to 7 disclose an embodiment of an inductive position sensor system 10 for motors according to the present invention. More specifically, said figures disclose an embodiment of an inductive position sensor 10 for high-speed motors without said sensor system comprising magnets, brushes or magnetic shields.

Fig. 1, 2 and 3 show the position sensor system 10. The sensor system 10 shown comprises a sensor module 1 which comprises a sensor, said sensor comprising the coils and a passive module 2 which comprises a conductor element. In an alternative embodiment (not shown), the conductor element is a part of a motor, preferably the shaft of the motor, in which case the sensor would not comprise a passive module.

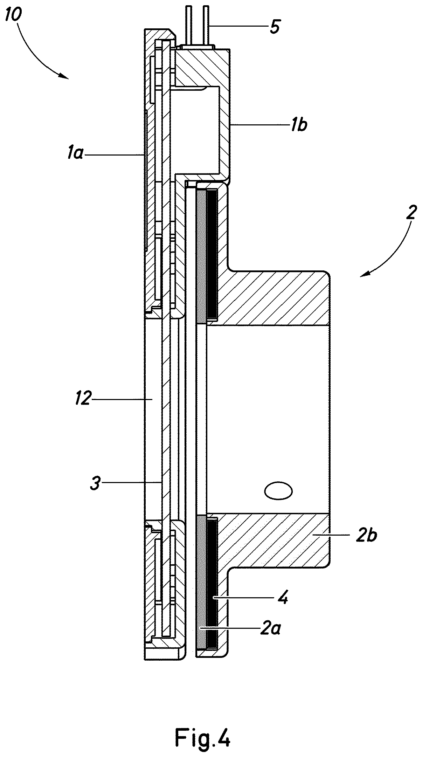

Fig. 4 shows a cross section of the sensor module 1 and the passive module 2. The sensor module 1 comprises a housing 1b and a cover 1a for said housing 1b, said sensor module 1 having the general form of a circular crown. Similarly, the passive module 2 comprises a housing 2b and a cover 2a for said housing 2b, said passive module 2 having the general form of a circular crown, the internal radius thereof being suitable for connection thereof to a device of which the position is to be determined.

The sensor module 1 comprises in its interior a PCB 3 in which coils are integrated.

The PCB 3 comprises at least two coils, at least one of which is an inductor coil and at least one of which is a passive coil. The coils are painted onto the PCB 3, preferably by means of copper lines. The PCB 3 may be of a known type. Alternatively, the inductor coils and the passive coils may not be incorporated in a PCB, but may be positioned inside the sensor module 1 and connected together.

In the example in the figures, the sensor system 10 comprises three coils: two of said coils are passive coils and one of said coils is an inductor coil which induces a voltage signal in the passive coils.

Moreover, the sensor module 1 also comprises an electronic signal processing circuit which comprises an analogue chip which detects the voltage induced by the inductor coil in the passive coils and processes said signal, said analogue chip providing an analogue output.

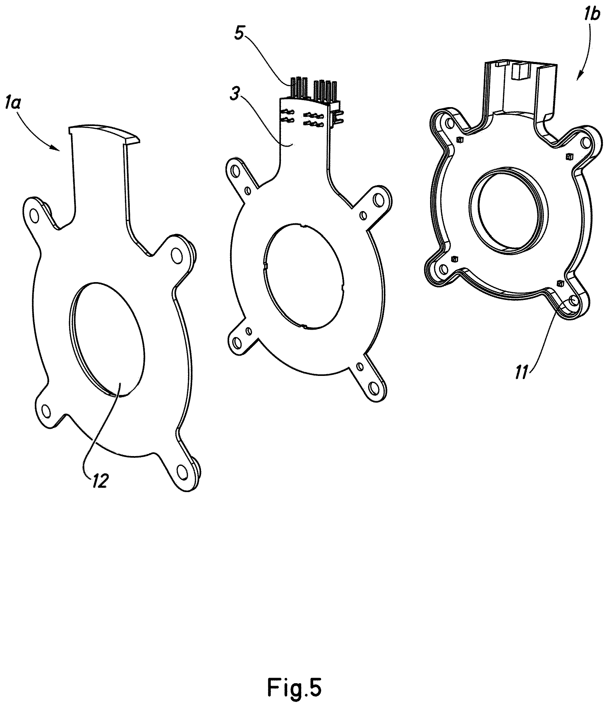

Fig. 5 shows the elements that compose the sensor module 1 of the example. The PCB 3 is comprised between a housing 1b and a cover 1a. Said PCB 3 also comprises securing elements. The PCB 3 comprises grooves for introducing screws situated on projections positioned as extensions of the outer perimeter thereof. Said grooves correspond to holes 11 positioned on the cover 1a and on the housing 1b of the sensor module 1. Alternatively, the PCB may incorporate other known securing methods, such as a male-female system. In addition, the PCB 3 comprises a connector 5 of a known type.

The sensor module 1 is assembled by inserting the PCB 3 into the housing 1b aligning said housing 1b and PCB 3 by means of the central holes 12 thereof and closing the housing 1b with the cover 1a using connection means therebetween in order to cover the PCB 3 completely. In the example shown, said connection means consist of centring devices on the housing and centring holes on the PCB 3 (not shown), said connection being possible using other connection means such as rivets, click fastenings, adhesives, ultrasonic sealing, etc., ultrasonic sealing being preferable. Alternatively, the PCB 3 may be over-moulded, the housing and the cover forming a single part which surrounds the PCB.

The modules 1, 2 may comprise neither housings nor covers, the sensor system being formed only of the coils and the conductor element, which may both be positioned on PCBs. Alternatively, the metallic element is screen printed directly onto the housing 2b.

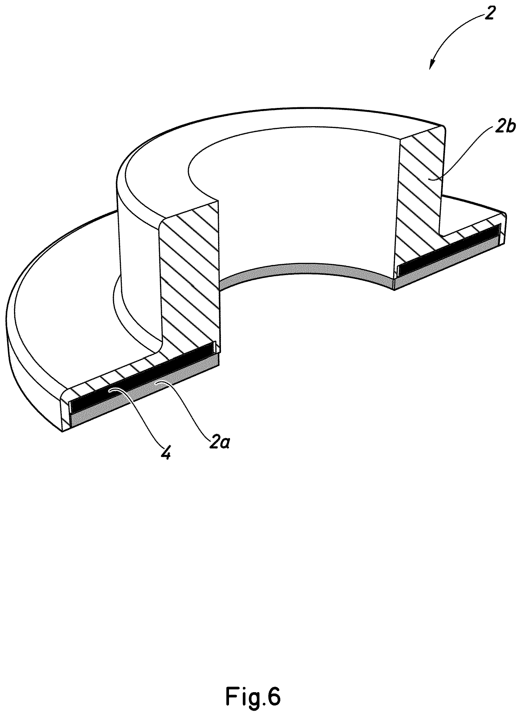

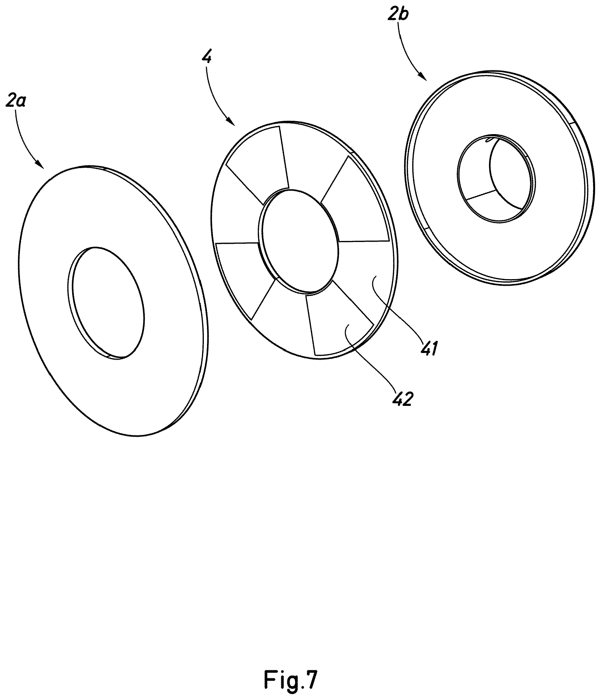

Fig. 6 and 7 show the passive module 2 which comprises a conductor element. The passive module 2 in the example comprises a housing 2b and a cover 2a, the PCB 4 being positioned between the two elements 2b, 2a. The passive module 2 is assembled in a similar way to the assembly of the sensor module 1.

The conductor element shown in Fig. 6 and 7 is preferably a metallic element 42 integrated in a PCB 4 which comprises non-metallic elements 41. The PCB 4 is of a known type, the metallic element 42 being integrated therein. Preferably, the metallic part 42 of the PCB 4 is made of copper. Alternatively, the conductor element may be any material different from that a PCB which combines a conductor and a non-conductor.

The PCB 4, as well as the housing 2b and the cover 2a of the passive module 2, have the general form of a circular crown, with the internal radius thereof corresponding to the internal radius of the circular crown of the sensor module 1. The internal radius of the passive module 2 is designed to allow the sensor system 10 to be rigidly connected to the shaft of application of the motor of which the position must be detected with both modules 1, 2 parallel. In this way, the position of the passive module 2 is equivalent to the position of the motor.

The relative movement of the conductor element of the PCB 4 around the coils of the PCB 3 modifies the voltage generated in the coils. When the conductor element crosses the magnetic field induced by the inductor coil in the passive coil, a parasitic current, also known as a Foucault current or eddy current, is produced. These Foucault currents oppose the effect of the magnetic field applied.

The signal induced in the passive coil varies with the passage of a conductor element above said induced passive coil, producing a shading effect which causes the voltage signal in the covered or shaded area of the coil to be zero. Therefore, the voltage signal produced by the coils is used to determine the position of the conductor element which, since the rotation thereof is rigidly connected to the rotation of the object of which the position is to be determined, allows the position of said object to be determined. This system allows an analogue chip to be used to process the voltage signal and an analogue output signal to be obtained. Said output signal is a continuous signal of which the value keeps changing. The position of the motor is calculated according to the value of the output signal. In addition, the chip allows the parameters (gain, offset, etc.) of the signals to be configured such that the output signal is conditional on the parameters selected.

The system disclosed in the present invention, in which an analogue output signal is obtained, allows the position of the object, of which the position is to be determined, to be ascertained directly from an induced voltage signal, in other words, without complex calculations. This affords an advantage over other sensors and sensor systems where the position is determined with additional electronics and a subsequent calculation is performed. This helps make the sensor system 10 according to the present invention suitable for high-speed applications where other chips become locked. Moreover, the use of an analogue chip ensures that the mechanical working speed of the system is not limited by the digital clock speeds of the electronic components.

The sensor system 10 of the example is able to provide various different output signals, a first high-speed analogue or digital output, which provides position information in analogue, sine-cosine form or in incremental digital output form, and a second digital serial peripheral interface (SPI) output for diagnosis and programming. In addition, and preferably and advantageously, the sensor system 10 according to the present invention does not incorporate magnets, brushes or other detection elements. By not incorporating said elements, said sensor is much lighter in weight than conventional sensors, thus providing an additional energy saving. Nor is said sensor affected by the electromagnetic interference (EMI) that normally originates from magnetic couplings of the rotor and stator using magnets, as detection is not dependent thereon.

In an alternative embodiment, the conductor element is a part of the motor, preferably the shaft of the motor. In this embodiment, the sensor system comprises a sensor which comprises at least one inductor coil and at least one passive coil, the at least one inductor coil inducing voltage in the at least one passive coil, and an electronic signal processing circuit, said electronic circuit comprising a chip for processing a signal corresponding to the magnetic field induced in the at least one passive coil; the conductor element being a part of the motor, said part of the motor being movable with respect to the at least one passive coil such that the magnetic field induced in the at least one passive coil varies, in which case the sensor would not comprise a passive module. In this embodiment, the sensor system may include a sensor module similar to the one described above.

The present invention also discloses a position sensor for high-speed motors, as well as a sensor module for high-speed motors as described above.

Although the invention has been described and illustrated based on various representative examples, it should be understood that said embodiments given as an example in no way limit the present invention, and therefore any variations that are included directly or by equivalence in the content of the following claims, should be considered to fall within the scope of the present invention.

## Claims

1. Inductive position sensor system for high-speed motors, without said sensor system comprising magnets, brushes or magnetic shields,
the sensor system comprising a sensor which comprises at least one inductor coil and at least one passive coil, the at least one inductor coil inducing voltage in the at least one passive coil, and an electronic signal processing circuit, said electronic circuit comprising a chip for processing a signal corresponding to the magnetic field induced in the at least one passive coil; the sensor system also comprising a conductor element which is movable with respect to the at least one passive coil such that the magnetic field induced in the at least one passive coil varies;
**characterised in that** the sensor comprises at least three coils, one of said at least three coils being an inductor coil and two of said at least three coils being passive coils;
and **in that** the chip is an analogue chip, said analogue chip supplying an analogue sine-cosine output signal, such that the position can be detected from a reading of the voltage of the passive coil or coils without having to demodulate the signal by means of additional electronics.

2. Sensor system according to claim 1, **characterised in that** the sensor has the general form of a circular crown.

3. Sensor system according to any one of the preceding claims, **characterised in that** the analogue chip is integrated in a PCB.

4. Sensor system according to any one of the preceding claims, **characterised in that** the inductor coils and the passive coils are painted onto a PCB.

5. Sensor system according to any one of the preceding claims, **characterised in that** it comprises more than one set of coils, each of the sets of coils comprising at least three coils, one of said at least three coils being an inductor coil and two of said at least three coils being passive coils.

6. Sensor system according to any one of the preceding claims, **characterised in that** the inductor coils, the passive coils and the analogue chip are positioned on the same PCB.

7. Sensor system according to any one of the preceding claims, **characterised in that** the conductor element is a PCB with areas of painted copper.

8. Sensor system according to any one of the preceding claims, **characterised in that** the conductor element is a metallic element in the form of a circular crown, said conductor element having means for coupling to a part of the motor.

9. Sensor system according to any one of the preceding claims, **characterised in that** the inductor coils, the passive coils and the analogue chip are positioned inside a sensor module formed by a housing and a cover.

10. Sensor system according to any one of the preceding claims, **characterised in that** the chip is configured for processing the voltage signal of the passive coils.

11. Sensor system according to any one of the preceding claims, **characterised in that** it comprises more than one chip.

12. Inductive position sensor for high-speed motors, which comprises at least one inductor coil and at least one passive coil, the at least one inductor coil inducing voltage in the at least one passive coil, and an electronic signal processing circuit, said electronic circuit comprising a chip for processing a signal corresponding to the magnetic field induced in the at least one passive coil; **characterised in that** it comprises at least three coils, one of said at least three coils being an inductor coil and two of said at least three coils being passive coils; and **in that** the chip is an analogue chip configured to process the voltage signal of the passive coils, said analogue chip providing an analogue, sine-cosine output signal, such that the position can be detected from a reading of the voltage of the passive coil or coils without having to demodulate the signal by means of additional electronics.

13. Sensor according to claim 12, **characterised in that** said analogue chip is integrated in a PCB and said inductor coils and passive coils are painted onto said same PCB.

14. Sensor according to any one of claims 12 to 13, **characterised in that** it comprises more than one set of coils, each of said sets of coils comprising at least three coils, one of said at least three coils being an inductor coil and two of said at least three coils being passive coils.

15. Sensor according to any one of claims 12 to 14, **characterised in that** it comprises more than one chip.
